(19) Europäisches Patentamt
European Patent Office
Office européen des brevets

(11) Publication number: **0 105 062**
**B1**

# (12) EUROPEAN PATENT SPECIFICATION

(45) Date of publication of patent specification: **04.09.85**

(51) Int. Cl.[4]: **C 09 J 3/14,** C 08 F 222/00

(21) Application number: **82305207.1**

(22) Date of filing: **30.09.82**

## (54) Coloured cyanoacrylate adhesive composition.

(43) Date of publication of application:
**11.04.84 Bulletin 84/15**

(45) Publication of the grant of the patent:
**04.09.85 Bulletin 85/36**

(84) Designated Contracting States:
**AT BE CH DE FR GB IT LI LU NL SE**

(56) References cited:
**US-A-3 316 205**

(73) Proprietor: **SUMITOMO CHEMICAL COMPANY, LIMITED**
**15 Kitahama 5-chome Higashi-ku**
**Osaka-shi Osaka 541 (JP)**

(73) Proprietor: **TAOKA CHEMICAL CO., LTD**
**No. 2-11, Nishimikuni 4-chome**
**Yodogawa-ku Osaka-shi Osaka-fu (JP)**

(72) Inventor: **Nakata, Tiaki**
**8-19-319, Shinchujocho**
**Ibaraki Osaka-fu (JP)**
Inventor: **Kawazoe, Noriyuki**
**15-5, Motomachi**
**Suita Osaka-fu (JP)**
Inventor: **Takenaka, Toshio**
**5-10-10, Tokiwadai Toyono-cho**
**Toyono-gun Osaka-fu (JP)**

(74) Representative: **Geering, Keith Edwin et al**
**REDDIE & GROSE 16 Theobalds Road**
**London WC1X 8PL (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 105 062 B1

**Description**

The present invention relates to α-cyanoacrylate adhesives coloured with dyes.

α-cyanoacrylates of the following formula (I)

$$\begin{array}{c} CN \\ | \\ CH_2{=}C{-}CO{-}OR \end{array} \qquad (I)$$

wherein R is a $C_1$—$C_{16}$ alkyl, $C_2$—$C_6$ alkenyl, $C_1$—$C_6$ alkoxy, $C_2$—$C_4$ alkyl, tetrahydrofurfuryl, phenyl or cyclohexyl group, are colourless and transparent liquids of high fluidity at room temperature, and when coated as thin film onto substrate surfaces and exposed to ambient atmosphere they rapidly harden to form strong solid films. Advantage can be taken by these properties by rapidly applying such compound between two materials, whereby the materials are very strongly bonded in several to several tens of seconds without applying pressure or heat. Because of such properties, α-cyanoacrylate adhesives have been used as instantaneous adhesives for producing precision apparatus, electrical and electronic apparatus, etc. Further, in recent years their demand for domestic use has increased, and they are in use for bonding various metallic articles, ceramics, glass articles, rubber articles, plastics articles and the like.

Different values of properties such as viscosity, bonding strength, setting time and so on are required for this type of adhesive depending upon intended use, (for example the kind of materials to be bonded, the form of bonding, the period of time necessary for bonding, the property of the bonded materials and the like), and to satisfy these requirements different kinds of this type of adhesive composition are now on the market.

To satisfy various requirements this type of adhesive may for example include 10 to 50 ppm of sulfur dioxide and 50 to 500 ppm of hydroquininone to elevate storage stability, and also other stabilizers, polymerization inhibitors, thickeners, diluents, plasticizers, etc. It is therefore very desirable to have a means to distinguish different kinds of these adhesive compositions at a glance.

The well-known method for distinguishing these cyanoacrylate adhesives is to colour them by the addition of particular dyes, for example 1-hydroxy-4-amino (or 4-arylamino)anthraquinones (British Patent No. 1,192,165 and U.S. Patents Nos. 3,699,076 and 4,062,827). These dyes, however, lower the bonding strength and storage stability of the cyanoacrylate adhesives.

Generally speaking, a deep coloration is favourable for discrimination or distinction but causes staining of the materials bonded as well as lowering of the bonding strength and storage stability. On the other hand light coloration makes discrimination between coated and uncoated areas difficult, so that parts to be coated remain partly uncoated or more parts than required are coated, thereby impairing the bonding strength or causing staining.

By extensive study the present inventors found particular fluorescent dyes which satisfactorily colour cyanoacrylate adhesives without impairing the bonding performances and storage stability thereof, and provide good visual distinction even in light colorations.

According to the present invention, there is provided an adhesive composition comprising an α-cyanoacrylate having the formula:

$$\begin{array}{c} CN \\ | \\ CH_2{=}C{-}CO{-}OR \end{array}$$

wherein R is a $C_1$—$C_{16}$ alkyl, $C_2$—$C_6$ alkenyl, $C_1$—$C_6$ alkoxy $C_2$—$C_4$ alkyl, tetrahydrofurfuryl, phenyl or cyclohexyl group, and at least one dye selected from C.I. Solvent Green 5, C.I. Acid Red 50 and C.I. Acid Red 52.

The α-cyanoacrylates usable in the present invention include, for example, methyl α-cyanoacrylate, ethyl α-cyanoacrylate, propyl α-cyanoacrylate, butyl α-cyanoacrylate, amyl α-cyanoacrylate, hexyl α-cyanoacrylate, cyclohexyl α-cyanoacrylate, benzyl α-cyanoacrylate, phenyl α-cyanoacrylate, octyl α-cyanoacrylate, dodecyl α-cyanoacrylate, allyl α-cyanoacrylate, propargyl α-cyanoacrylate, methoxyethyl α-cyanoacrylate, ethoxyethyl α-cyanoacrylate, furfuryl α-cyanoacrylate, tetrahydrofurfuryl α-cyanoacrylate, chloroethyl α-cyanoacrylate, fluoroethyl α-cyanoacrylate, hexachloroethyl α-cyanoacrylate and the like. These α-cyanoacrylates may be used alone or in any combination of two or more of them.

The dyes used in the present invention, C.I. Solvent Green 5, C.I. Acid Red 50 and C.I. Acid Red 52, have structures represented by the formulae II, III and IV, respectively. These dyes are soluble in the α-cyanoacrylates to give a bright yellow having a greenish fluorescence, a bright yellowish red having a greenish fluorescence, and a bright bluish red having a greenish fluorescence, respectively.

C.I. Solvent Green 5:

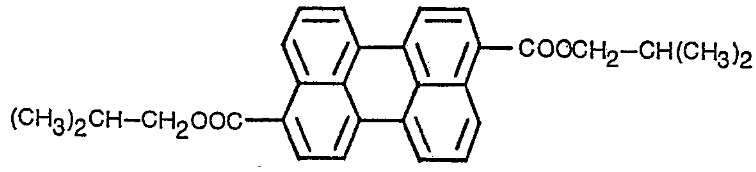

II

C.I. Acid Red 50:

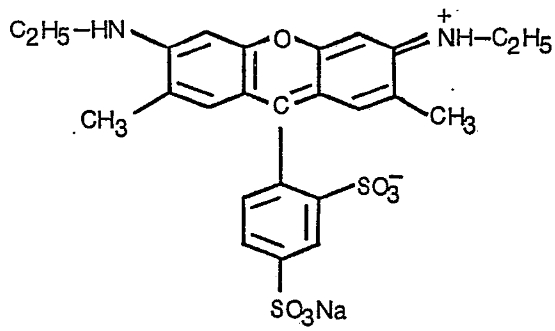

III

C.I. Acid Red 52:

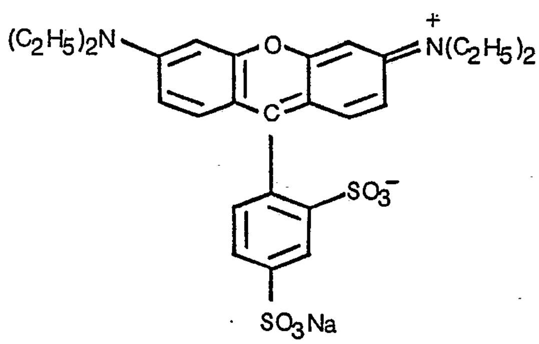

IV

These dyes may be used alone or as a mixture of two or more.

The amount of dyes to be added is e.g. 01 to 10000 ppm, preferably 0.5 to 2000 ppm, based on the weight of cyanoacrylate adhesive. When the amount added is below 0.1 ppm, both coloration and fluorescence may be rather faint. When the amount added is above 10000 ppm, total dissolution of dye may become difficult and an adverse effect is sometimes exerted on the bonding strength.

Other dyes known for colouring cyanoacrylates may be used in addition as long as the benefit of the present invention is not lost, e.g. provided that fluorescence is maintained to effect the object of discrimination and visible distinction to a sufficient extent.

The dyes usable in the present invention sometimes contain basic substances and other impurities from their production, and in such cases, it is preferred to previously wash the dyes with a dilute aqueous acid solution (e.g. 1% hydrochloric acid), followed by drying and pulverizing.

When such dyes are used without washing, they tend to affect the storage stability of the adhesives.

The coloured fluorescent cyanoacrylate adhesives of the present invention may contain various additives used in the conventional cyanoacrylate adhesives, for example, radical polymerization inhibitors such as hydroquinone, hydroquinone monomethyl ether, catechol, pyrogallol, bisphenol A and the like (about 1 to about 10000 ppm, preferably 10 to 5000 ppm based on the weight of the adhesive), anionic polymerization inhibitors such as $SO_2$, $SOCl_2$, $SO_2Cl_2$, HF, $NO_2$, p-toluenesulfonic acid, methanesulfonic acid, propanesulfone, phosphoric acid, sulfuric acid, and the like.

Further, for producing adhesive compositions having increased viscosity, viscosity regulators such as methyl methacrylate polymer, vinyl acetate polymer, cellulose acetate isobutyrate, acrylic rubber, etc. may be incorporated in the adhesive. In addition to these, plasticizers may be added to give softness to the hardened bond layer, and modifiers for giving impact strength and thermal resistance may be added.

The coloured fluorescent cyanoacrylate adhesives of the present invention have a beautiful yellow or red colour having a greenish fluorescence, even when C.I. Solvent Green 5, C.I. Acid Red 50 or C.I. Acid Red 52 is used in small amounts. The adhesives of the present invention can be coloured without unduly impairing bonding performance and storage stability, and may thus be superior in bonding performance and stability of the α-cyanoacrylate itself to the conventional coloured adhesives, whilst providing good discrimination between different kinds of the adhesive and between coated and uncoated areas even in a light coloration.

The coloured fluorescent cyanoacrylate adhesives of the present invention are suitable for bonding

almost all the materials, i.e. rubbers, plastics, metals, woods and the like, to which the conventional instantaneous adhesives have been applied, and are usable, for example, in the fields of small-sized parts, construction of precision apparatus, thread-locking, sealing, artificial nail and the like.

The present invention will be illustrated in more detail with reference to the following Examples. The test items and test methods in the Examples are as follows:

Viscosity

Measured at 20°C by means of a Brookfield viscometer (mPas).

Tensile shear strength

The test was carried out as follows according to "Test method for cyanoacrylate adhesives" described in JIS K-6861: A test piece according to JIS G-3141 (SPCC, cold-rolled steel sheet), 100 mm×1.6 mm in size, was sound-papered with sand paper AA-150 and degreased with an acetone/toluene (1:1) mixed liquor; after coating the adhesive on the surface, a pair of the test pieces were superposed so that the bond area was 25 mm×12.5 mm, pressed against each other by a force of about 2 kgf and aged as they were for 24 hours in a room at 20°C and 60% RH; then tensile shear strength was measured on a 5-ton capacity tensile tester, and a mean value of five tests was taken as tensile shear strength.

Setting time

Test pieces were prepared in the same manner as in the foregoing test method for tensile shear strength. After coating the adhesive so that the bond area was 25 mm×12.5 mm, the test pieces were superposed and pressed against each other by a force of about 2 kgh. After different intervals, the bonded test pieces were fixed at the upper end by jig, and a weight of 5 kg was put on the lower end of the test piece to apply tensile load. Thus, a period of time, from the bonding to the time when the test piece no longer showed bonding break, was measured, and taken as setting time.

Storage stability

After storing at 70°C for 7 days, the viscosity, tensile shear strength and setting time were measured in the manner described above.

Examples 1 to 5 and Comparative Examples 1 and 2

C.I. Solvent Green 5 in amounts (ppm) shown in Table 1 was dissolved in ethyl α-cyanoacrylate containing 15 ppm of $SO_2$ and 550 ppm of hydroquinone. Each of the adhesive compositions obtained had a greenish fluorescence and a bright yellow colour. These adhesives were examined for bonding performance and storage stability in comparison with non-coloured adhesives, and the results are as shown in Table 1.

During these tests in which the coloured adhesives and non-coloured ones were coated on steel plate, each coating was observed. With the former, the boundary of coating was clearly recognized irrespective of the depth of coloration, while with the latter, the boundary of coating was hardly recognizable. In a poorly illuminated room, the boundary of coating was indistinct for both the coloured and non-coloured adhesives, but on irradiation with black light, it was recognizable very clearly for the coloured adhesives because of a bright greenish fluorescence.

TABLE 1

| | Exp. No. | Amount of dye added (ppm) | Initial stage: Viscosity | Initial stage: Tensile shear strength | Initial stage: Setting time (sec) | Storage stability: Viscosity | Storage stability: Tensile shear strength | Storage stability: Setting time (sec) |
|---|---|---|---|---|---|---|---|---|
| Example | 1 | 5 | 2.5 | 202 | 45 | 3.0 | 196 | 60 |
| Example | 2 | 100 | 2.5 | 211 | 45 | 3.0 | 203 | 60 |
| Example | 3 | 500 | 2.5 | 207 | 45 | 3.0 | 208 | 60 |
| Example | 4* | 500 | 60 | 201 | 70 | 110 | 204 | 70 |
| Example | 5 | 1000 | 2.5 | 212 | 50 | 3.0 | 210 | 60 |
| Comparative Example | 1 | None | 2.5 | 205 | 45 | 3.0 | 219 | 60 |
| Comparative Example | 2* | None | 60 | 207 | 60 | 100 | 212 | 75 |

Note: Each adhesive of Example 4 and Comparative Example 2 additionally comprises 10 parts by weight based on 100 parts by weight of the adhesive (PHR) of methyl methacrylate polymer.

Examples 6 to 12 and Comparative Examples 3 and 4

C.I. Acid Red 50 and C.I. Acid Red 52 in amounts as shown in Table 2 were dissolved in methyl α-cyanoacrylate containing 15 ppm of $SO_2$ and 200 ppm of hydroquinone. Each of the adhesive compositions obtained had a greenish fluorescence and a bright red colour.

The foregoing dyes were treated before use as follows: Five grams of the crude product was dispersed in 200 ml of 1% aqueous hydrochloric acid solution, stirred for 30 minutes for washing, filtered, dried at 80°C for 24 hours and then pulverised.

The bonding performances and storage stability are as shown in Table 2.

The coatings on steel plate were observed, and it was found that each of the coloured adhesives was clearly recognized, but with the non-coloured ones the boundary of coating was undistinguishable. In a dark room, both the adhesives were invisible, but on irradiation with black light, the coloured ones alone, emitting a beautiful greenish fluorescence, could clearly be recognized.

TABLE 2

| | Ex. No. | Amount of dye added: C.I. Acid Red 50 | Amount of dye added: C.I. Acid Red 52 | Initial stage: Viscosity | Initial stage: Tensile shear strength | Initial stage: Setting time (sec.) | Storage stability: Viscosity | Storage stability: Tensile shear strength | Storage stability: Setting time (sec.) |
|---|---|---|---|---|---|---|---|---|---|
| Example | 6 | 5 | — | 2.5 | 201 | 45 | 3.0 | 196 | 45 |
| | 7 | 500 | — | 2.5 | 207 | 45 | 3.0 | 206 | 45 |
| | 8 | 1000 | — | 2.5 | 203 | 45 | 3.0 | 207 | 45 |
| | 9 | — | 5 | 2.5 | 198 | 45 | 3.0 | 207 | 45 |
| | 10 | — | 500 | 2.5 | 206 | 45 | 3.0 | 206 | 45 |
| | 11* | — | 500 | 60 | 199 | 60 | 130 | 200 | 60 |
| | 12 | — | 1000 | 2.5 | 201 | 45 | 3.0 | 203 | 45 |
| Comparative Example | 3 | — | — | 2.5 | 205 | 45 | 3.0 | 209 | 45 |
| | 4* | — | — | 60 | 207 | 60 | 100 | 200 | 60 |

Note: Each adhesive of Example 11 and Comparative Example 4 additionally comprises 10 parts by weight based on 100 parts by weight of the adhesive (PHR) of methyl methacrylate polymer.

Comparative Examples 5 to 8

Two hundred ppm of each of the dyes described in U.S. Patent Nos. 3,699,076 and 4,062,827 was dissolved in ethyl α-cyanoacrylate containing 15 ppm of $SO_2$ and 500 ppm of hydroquinone. The adhesives obtained had a colour as shown in Table 3, but no fluorescence.

These coloured adhesives were examined and the results are as shown in Table 3.

TABLE 3

| Comparative example No. | Name of dye | Color | Storage stability: Tensile shear strength | Storage stability: Viscosity |
|---|---|---|---|---|
| 1 | Non | Non | 209 | 105 |
| 5 | 5-Amino-4-anilino-1,8-dihydroxy-anthraquinone | Blue | 204 | 410 |
| 6 | 1-Hydroxy-3-bromo-4-amino-anthraquinone | Red | 151 | 110 |
| 7 | 2-(3-Hydroxy-2-quinolinyl)-1H-indene-1,3(2H)-dione | Yellow | 140 | 105 |
| 8 | 4-p-Anisidino-1-hydroxy-anthraquinone | Purple | 186 | 260 |

**Claims**

1. An adhesive composition comprising an α-cyanoacrylate having the formula,

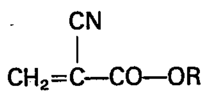

wherein R is a $C_1$—$C_{16}$ alkyl, $C_2$—$C_6$ alkenyl, $C_1$—$C_6$ alkoxy $C_2$—$C_4$ alkyl, tetrahydrofurfuryl, phenyl or cyclohexyl group, and at least one dye selected from C.I. Solvent Green 5, C.I. Acid Red 50 and C.I. Acid Red 52.

2. An adhesive composition according to claim 1, wherein the content of the dye is 0.1 to 10000 ppm based on the weight of the adhesive composition.

3. An adhesive composition according to claim 1 or 2 which additionally contains at least one member selected from polymerization inhibitors, viscosity regulators, plasticizers and impact strength modifiers.

4. Materials bonded with an adhesive composition according to any preceding claim.

**Patentansprüche**

1. Klebemittelzusammensetzung umfassen ein α-Cyanakrylat der Formel

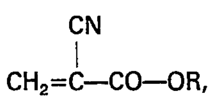

worin R $C_1$—$C_6$ Alkyl, $C_2$—$C_6$ Alkenyl, $C_1$—$C_6$ Alkoxy $C_2$—$C_4$ alkyl, Tetrahydrofurfuryl, Phenyl oder Cyclohexyl ist, und wenigstens einen Farbstoff aus der Gruppe enthaltend C.I. Solvent Green 5, C.I. Acid Red 50 und C.I. Acid Red 52.

2. Klebemittelzusammensetzung nach Anspruch 1, worin der Gehalt an Farbstoff 0,1—10000 ppm, bezogen auf das Gewicht der Klebemittelzusammensetzung, beträgt.

3. Klebemittelzusammensetzung nach Anspruch 1 oder 2, die zusätzlich wenigstens ein Mitglied der Gruppe enthaltend Polymerisationsinhibitoren, Viskositätsregler, Weichmacher und Schlagfestigkeitsmodifizierer, enthält.

4. Materialien, die mittels einer Klebemittelzusammensetzung nach einem der vorhergehenden Ansprüche gebunden sind.

**Revendications**

1. Composition adhésive comprenant un α-cyanacylate de formule

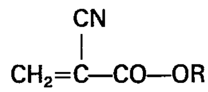

dans laquelle R est un groupe alkyle en $C_1$ à $C_{16}$, alcényle en $C_2$ à $C_6$, alkoxy en $C_1$ à $C_6$, alkyle en $C_2$ à $C_4$, tétrahydrofurfuryle, phényle ou cyclohexyle, et au moins un colorant choisi entre le Vert Solvant C.I. 5, le Rouge Acide C.I. 50 et le Rouge Acide C.I. 52.

2. Composition adhésive suivant la revendication 1, dont la teneur en colorant va de 0,1 à 10 000 ppm sur la base du poids de la composition adhésive.

3. Composition adhésive suivant la revendication 1 ou 2, qui contient en outre au moins un composant choisi entre des inhibiteurs de polymérisation, des régulateurs de viscosité, des plastifiants et des agents modifiant la résistance au choc.

4. Des matières liées avec une composition adhésive suivant l'une quelconque des revendications précédentes.